(19) Europäisches Patentamt
European Patent Office
Office européen des brevets

(11) **EP 4 478 457 A1**

(12) **EUROPEAN PATENT APPLICATION**
published in accordance with Art. 153(4) EPC

(43) Date of publication:
**18.12.2024 Bulletin 2024/51**

(21) Application number: 23752857.5

(22) Date of filing: 07.02.2023

(51) International Patent Classification (IPC):
*H01M 4/525* (2010.01)  *C01G 53/00* (2006.01)
*H01M 4/36* (2006.01)  *H01M 4/485* (2010.01)
*H01M 4/505* (2010.01)

(52) Cooperative Patent Classification (CPC):
**C01G 53/00; H01M 4/36; H01M 4/485; H01M 4/505;**
**H01M 4/525; Y02E 60/10**

(86) International application number:
**PCT/JP2023/003973**

(87) International publication number:
**WO 2023/153393 (17.08.2023 Gazette 2023/33)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **10.02.2022 JP 2022019841**

(71) Applicant: **Panasonic Intellectual Property**
**Management Co., Ltd.**
**Kadoma-shi, Osaka 571-0057 (JP)**

(72) Inventors:
• **SATOU, Yoshinori**
  **Kadoma-shi, Osaka 571-0057 (JP)**
• **NISHIMORI, Yuta**
  **Kadoma-shi, Osaka 571-0057 (JP)**
• **HARADA, Maho**
  **Kadoma-shi, Osaka 571-0057 (JP)**
• **NAKAYAMA, Takahito**
  **Kadoma-shi, Osaka 571-0057 (JP)**

(74) Representative: **Novagraaf International SA**
**Chemin de l'Echo 3**
**1213 Onex, Geneva (CH)**

(54) **POSITIVE ELECTRODE MATERIAL FOR SECONDARY BATTERIES**

(57) A positive electrode material for a secondary battery includes a secondary particle that is an aggregate of a plurality of primary particles. The plurality of primary particles each contain a first metal oxide as a positive electrode active material. The plurality of primary particles include first primary particles disposed at a surface of the secondary particle, second primary particles disposed inside the secondary particle and in contact with the first primary particles, and third primary particles disposed inside the secondary particle and not in contact with the first primary particles. The positive electrode material further includes a second metal oxide having a composition different from the first metal oxide. The second metal oxide is attached at least to surfaces of the first primary particles and the second primary particles. The second metal oxide is not attached to surfaces of the third primary particles, or, an amount of the second metal oxide attached to the surfaces of the third primary particles is smaller than an amount of the second metal oxide attached to the surfaces of the second primary particles.

FIG. 1

**Description**

[Technical Field]

The present disclosure relates to a positive electrode material for a secondary battery.

[Background Art]

For a secondary battery, as its energy density is increased, improvement in safety is required. In particular, it is important to reduce the heat generation due to internal short circuit. When the battery has internal short circuit, even though the short-circuited portion is small, the Joule heat generated by short-circuit current melts the separator, to form a larger short-circuited portion. When the short-circuited portion expands and the short-circuit current increases, the battery temperature rises acceleratingly. The higher the energy density of the secondary battery is, the more the Joule heat generated by short-circuit current increases.

Patent Literature 1 proposes a positive electrode active material comprising a composite oxide mainly composed of lithium and nickel and having a layered crystal structure, which is a powder having an element composition represented by a general formula: $Li_aNi_{1-b-c}M1_bM2_cO_2$, where $0.95 \leq a \leq 1.05$, $0.01 \leq b \leq 0.10$, and $0.10 \leq c \leq 0.20$ (here, M1 is one or more elements selected from Al, B, Y, Ce, Ti, Sn, V, Ta, Nb, W, and Mo, and M2 is one or more elements selected from Co, Mn, and Fe), and is characterized by that when the powder is pressure-molded, an electrical conductivity $\sigma$ at 25 °C of a powder compact at a compression density of 4.0 g/cm$^3$ is within the range of $5 \times 10^{-2} \geq \sigma \geq 5 \times 10^{-4}$ [S/cm].

[Citation List]

[Patent Literature]

Patent Literature 1: Japanese Laid-Open Patent Publication No. 2000-315502

[Summary of Invention]

[Technical Problem]

Patent Literature 1 says that, according to the above positive electrode active material, the thermal stability in a charged state can be improved, and even in the situation where the battery is internally short-circuited, the Joule heat generation by the short-circuit current can be suppressed, which makes it easy to ensure the safety.

However, when controlling the electrical conductivity of the powder compact as in Patent Literature 1, the battery ends up in being highly resistant as a whole, causing a deterioration in battery performance. Moreover, the solution in Patent Literature 1 is specialized for a composite oxide mainly composed of lithium and nickel, and is poor in versatility. An object of the present disclosure is to provide, regardless of the type and characteristics of the positive electrode active material, a positive electrode material that can maintain high resistance even in a heat-generating environment such as in the event of short circuit.

[Solution to Problem]

One aspect of the present disclosure relates to a positive electrode material for a secondary battery, including: a secondary particle that is an aggregate of a plurality of primary particles, wherein the plurality of primary particles each contain a first metal oxide as a positive electrode active material, and the plurality of primary particles include first primary particles disposed at a surface of the secondary particle, second primary particles disposed inside the secondary particle and in contact with the first primary particles, and third primary particles disposed inside the secondary particle and not in contact with the first primary particles, and further including: a second metal oxide having a composition different from the first metal oxide, wherein the second metal oxide is attached at least to surfaces of the first primary particles and the second primary particles, and the second metal oxide is not attached to surfaces of the third primary particles, or, an amount of the second metal oxide attached to the surfaces of the third primary particles is smaller than an amount of the second metal oxide attached to the surfaces of the second primary particles.

[Advantageous Effects of Invention]

According to the present disclosure, it is possible to provide, regardless of the type and characteristics of the positive electrode active material, a positive electrode material that can maintain high resistance even in a heat-generating environment such as in the event of short circuit, and also possible to maintain the battery performance.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawings]

[FIG. 1] A schematic longitudinal cross-sectional view of the internal structure of a secondary battery according to an embodiment of the present disclosure.
[FIG. 2] A schematic cross-sectional view of an essential part of a positive electrode according to an embodiment of the present disclosure.
[FIG. 3] An enlarged cross-sectional view of the essential part of the positive electrode of FIG. 2.

[Description of Embodiments]

Embodiments of a positive electrode material for a secondary battery according to the present disclosure will be described below by way of examples, but the present disclosure is not limited to the examples described below. In the following description, specific numerical values and materials are exemplified in some cases, but other numerical values and other materials may be adopted as long as the effects of the present disclosure can be obtained. In the present specification, when referring to "a range of a numerical value A to a numerical value B," the range includes the numerical value A and the numerical value B, and can be rephrased as "a numerical value A or more and a numerical value B or less." In the following description, when the lower and upper limits of numerical values related to specific physical properties, conditions, etc. are mentioned as examples, any one of the mentioned lower limits and any one of the mentioned upper limits can be combined in any combination as long as the lower limit is not equal to or more than the upper limit. When a plurality of materials are mentioned as examples, one kind of them may be selected and used singly, or two or more kinds of them may be used in combination.

A positive electrode material for a secondary battery according to an embodiment of the present disclosure includes a secondary particle that is an aggregate of a plurality of primary particles. The plurality of primary particles each contain a first metal oxide as a positive electrode active material. The positive electrode active material is typically a lithium-containing transition metal oxide, but is not limited to a particular one. The positive electrode material further includes a second metal oxide having a composition different from the first metal oxide. The second metal oxide may not necessarily be a positive electrode active material that exhibits an electrochemical capacity like the first metal oxide. That is, the second metal oxide may be substantially electrochemically inert. The second metal oxide may be any oxide that maintains a higher resistance than the first metal oxide in a heat-generating environment such as in the event of short circuit. The second metal oxide plays a role of increasing the safety of the secondary battery.

The plurality of primary particles include first primary particles disposed at a surface of the secondary particle, second primary particles disposed inside the secondary particle and in contact with the first primary particles, and third primary particles disposed inside the secondary particle and not in contact with the first primary particles. Primary particles exposed even slightly on the surface of the secondary particle are the first primary particles.

That is, the first primary particles constitute the outermost surface of the secondary particle. The second primary particles are the closest to the first primary particles and present on the inner side than the outermost surface of the secondary particle. The third primary particles are not in contact with the first primary particles and are present on the more inner side in the secondary particle than the second primary particles. The secondary particle may include primary particles present on the further more inner side than the third primary particles.

The second metal oxide is attached at least to the surfaces of the first primary particles and the second primary particles. Since the second primary particles are not exposed on the surface of the secondary particle, the second metal oxide attached to the surfaces of the second primary particles can be seen as being present at the interface between the first primary particles and the second primary particles. The second metal oxide is not attached to the surfaces of the third primary particles, or, the amount of the second metal oxide attached to the surfaces of the third primary particles is smaller than the amount of the second metal oxide attached to the surfaces of the second primary particles. When the second metal oxide is not attached to the surfaces of the third primary particle, the second metal oxide is present at the interface between the first primary particles and the second primary particles, while not present at the interface between the second primary particles and the third primary particles. In short, the second metal oxide does not cover all the surfaces of the plurality of the primary particles, but is localized so as to selectively cover part of the secondary particle on its surface side. Furthermore, the second metal oxide does not cover only the outermost surface of the secondary particle.

When all the primary particles in the secondary particle of the positive electrode material are covered with the second metal oxide, the electronic conductivity and the ionic conductivity in the secondary particle will be impaired. On the other hand, when only the outermost surface of the secondary particle is covered with the second metal oxide, the effect of improving the safety will be limited. Regarding this, in the positive electrode material according to the present disclosure, the second metal oxide is partially localized in the secondary particle on its surface side. This can enhance the safety in the event of abnormality (e.g., in the event of heat generation due to current concentration at the short-circuited portion), without impairing the electronic conductivity and the ionic conductivity.

Specifically, when the primary particles constituting the surface of the secondary particle of the positive electrode active material expand due to the heat generated in the event of short circuit and the like, to increase the contact points between the primary particles, this may facilitate the reduction in resistance. Regarding this, the second metal oxide is attached not only to the surfaces of the first primary particles but also to the surfaces of the second primary particles. This can suppress the reduction in resistance due to the expansion of the first primary particles, and also suppress the reduction in resistance due to expansion of the second primary particles. The surface side of the secondary particle is susceptible to the influence by heat generation, and the primary particles present there expands greatly. Therefore, the second metal oxide is preferably attached to both the first primary particle surfaces and the second primary particle surfaces. In particular, preferably, the amount of the second metal oxide attached to the first primary particle surfaces is larger than that of the second metal oxide attached to the second primary particle surfaces. Here, suppressing the reduction in resistance of the primary particles (first metal oxide) by the second metal oxide can be said as, for example, compensating for the reduction in resistance of the first metal oxide by the high resistance of the second metal oxide.

The third primary particles, on the other hand, originally have relatively high reaction resistance. When the second metal oxide is attached thereto, ordinary battery reactions tend to be inhibited. Regarding this, the third primary particles are barely covered with the second metal oxide. This can sufficiently ensure the electronic conductivity and the ionic conductivity in the secondary particle necessary for battery reactions. Furthermore, it is considered that this can make the reactivity of the whole secondary battery uniform, and also can suppress the deterioration of the positive electrode.

Therefore, by using the positive electrode material according to the present disclosure, excellent safety and excellent battery performance of the secondary battery can be both achieved in a heat-generating environment such as in the event of short circuit.

The second metal oxide may also be attached to the surfaces of the third primary particles, but in view of ensuring high electronic conductivity and high ionic conductivity in the secondary particle, the amount of the second metal oxide attached to the surfaces of the third primary particles is desirably smaller than that of the second metal oxide attached to the surfaces of the second primary particles.

The amounts of the second metal oxide attached to the first primary particles, the second primary particles, and the third primary particles can be measured by, for example, obtaining a cross section of the positive electrode using a cross-section polisher (CP), and then, performing an elemental mapping using scanning electron microscopy-energy dispersive X-ray spectroscopy (SEM-EDX) or transmission electron microscopy-energy dispersive X-ray spectroscopy (TEM-EDX), to observe the cross section of active material particles.

From the cross-sectional image, 10 particles are selected from each of the first, second, and third primary particles, and for each particle, a region along its surface where the thickness from the surface is 10 nm is defined as a near-surface region. In the defined near-surface region, the area of a portion in which the second metal oxide is detected is calculated and determined as a ratio per unit cross-sectional area of the primary particle (hereinafter referred to as a "ratio S"). The ratio S in the near-surface region of the first primary particle is denoted by $S1$, the ratio S in the near-surface region of the second primary particle is denoted by $S2$, and the ratio S in the near-surface region of the third primary particle is denoted by $S3$. The attached amounts of the second metal oxide can be compared using, for example, the integrated value of the EDX detection intensity in each portion. Comparison between the attached amounts of the second metal oxide can be done using, for example, the detection intensity of the metal element contained in the second metal oxide.

The attached amounts of the second metal oxide satisfy $S2 > S3$, and the ratio $S3/S2$ of $S3$ to $S2$ is preferably 0 or more and 0.2 or less, more preferably 0 or more and 0.1 or less. Preferably, $S1 \geq S2 > S3$ is satisfied, and more preferably $S1 > S2 > S3$ is satisfied. The $S2$ is preferably 3% or more, more preferably 15% or more of the $S1$. The $S2$ is preferably 30% or less, more preferably 25% or less of the $S1$. When the $S2$ is not too small relative to the $S1$, the effect by the second metal oxide to suppress the heat generation in the event of short circuit and other events can be sufficiently obtained. Moreover, when the $S2$ is not too large relative to the $S1$, the electronic conductivity and the ionic conductivity of the positive electrode material can be sufficiently ensured. More preferably, the $S3$ is 5% or less of the $S1$. Particularly preferably, the second metal oxide is not attached to the surfaces of the third primary particles.

A secondary battery including the positive electrode material according to the present embodiment may be a liquid-type secondary battery containing a liquid electrolyte as a nonaqueous electrolyte, and may be an all-solid secondary battery containing a solid electrolyte as a nonaqueous electrolyte. In the following, with a lithium-ion secondary battery taken as an example, the configurations of their components will be specifically described.

<Positive electrode>

A positive electrode includes a positive electrode current collector, and a positive electrode active material layer supported on the positive electrode current collector. The positive electrode active material layer includes the already-described positive electrode active material.

[Positive electrode current collector]

The positive electrode current collector is constituted of a sheet of conductive material. The positive electrode current collector may be a non-porous conductive substrate (metal foil, etc.) or a porous conductive substrate (mesh, net, punched sheet, etc.). The material of the positive electrode current collector may be, for example, stainless steel, aluminum, an aluminum alloy, titanium, and the like. The thickness of the positive electrode current collector is, although not particularly limited to, for example, 1 to 50 $\mu$m, and may be 5 to 30 $\mu$m.

[Positive electrode active material layer]

The positive electrode active material layer is supported on one or both surfaces of the positive electrode current collector. The positive electrode active material layer, usually, is a positive electrode mixture layer constituted of a positive electrode mixture and is in the form of a layer or film disposed on the positive electrode current collector. The positive electrode mixture includes particles of a positive electrode active material as an essential component, and may further include a binder, a thickener, a conductive agent, and the like as optional components. The positive electrode active material layer can be formed by, for example, applying a positive electrode slurry of a positive electrode mixture dispersed into a dispersion medium, onto the surface of the positive electrode current collector, followed by drying. The dry applied film may be rolled as necessary.

The thickness of the positive electrode active material layer may be, although not particularly limited to, for example, 10 $\mu$m or more and 200 $\mu$m or less, or 30 $\mu$m or more and 100 $\mu$m or less. One positive electrode active material layer may be formed of a plurality of layers having different compositions from each other. For example, two or more layers containing active material particles with different average particle diameters from each other may be stacked, or two or more layers differing in the type or composition of positive electrode active material from each other may be stacked.

(First metal oxide)

The first metal oxide that is the positive electrode active material typically includes a lithium-containing transition metal oxide. In view of achieving high capacity, a lithium-nickel composite oxide (composite oxide N) containing at least Ni as a transition metal may be included. The composite oxide N may be a lithium-containing transition metal oxide containing Li and Ni and having a layered rock-salt type crystal structure. The proportion of the composite oxide N in the positive electrode active material is, for example, 50 mass% or more, may be 80 mass% or more, and may be 90 mass% or more.

The composite oxide N contains Ni, and may further contain at least one selected from the group consisting of Co, Mn, and Al. Co, Mn, and Al contribute to stabilizing the crystal structure of the composite oxide N.

The composite oxide N is represented by, for example, a formula: $Li_\alpha Ni_{(1-x1-x2-y-z)}Co_{x1}Mn_{x2}Al_y Me_z O_{2+\beta}$. The element Me is an element other than Li, Ni, Co, Mn, Al, and O. The value of $\alpha$ representing the atomic ratio of Li satisfies, for example, $0.95 \leq \alpha \leq 1.05$, and increases and decreases during charging and discharging. In $(2+\beta)$ representing the atomic ratio of O, $\beta$ satisfies $-0.05 \leq \beta \leq 0.05$. The value of 1-x1-x2-y-z (= v) representing the atomic ratio of Ni is, for example, 0.50 or more, may be 0.80 or more, and may be 0.90 or more, or 0.95 or more. The value of v representing the atomic ratio of Ni may be 0.98 or less, and may be 0.95 or less.

The value of x1 representing the atomic ratio of Co is, for example, 0.1 or less $(0 \leq x1 \leq 0.1)$, and may be 0.08 or less, 0.05 or less, and may be 0.01 or less. When x1 is 0, this encompasses a case where Co is below the detection limit.

The value of x2 representing the atomic ratio of Mn is, for example, 0.1 or less $(0 \leq x2 \leq 0.1)$, and may be 0.08 or less, may be 0.05 or less, and may be 0.03 or less. The value of x2 may be 0.01 or more, and may be 0.03 or more.

The value of y representing the atomic ratio of Al is, for example, 0.1 or less $(0 \leq y \leq 0.1)$, and may be 0.08 or less, may be 0.05 or less, and may be 0.03 or less. The value of y may be 0.01 or more, and may be 0.03 or more.

The value of z representing the atomic ratio of the element Me is, for example, $0 \leq z \leq 0.10$, may be $0 < z \leq 0.05$, and may be $0.001 \leq z \leq 0.01$.

The element Me may be at least one element selected from the group consisting of Ti, Zr, Nb, Mo, W, Fe, Zn, B, Si, Mg, Ca, Sr, Sc, and Y Note that the element, such as Ti, contained as the element Me in a very small amount in the first metal oxide is an element that constitutes the first metal oxide, and is not an element that acts as a resistance component like the second metal oxide.

The average particle diameter of the secondary particles of the positive electrode active material is, for example,

3 $\mu$m or more and 30 $\mu$m or less, and may be 5 $\mu$m or more and 25 $\mu$m or less. The average particle diameter of the primary particles of the positive electrode active material is, for example, 50 nm or more and 2 $\mu$m or less. Here, the average particle diameter of the secondary particles is a median diameter ($D_{50}$) at 50% cumulative volume in a volume-based particle size distribution obtained using a laser diffraction particle size distribution analyzer. The active material particles may be separated and collected from the positive electrode. The measuring instrument that can be used is, for example, "LA-750", available from Horiba, Ltd. (HORIBA).

The average particle diameters of the secondary particles and the primary particles may be measured from a thickness-wise cross section obtained by cutting the positive electrode mixture layer and the positive electrode current collector together. The cross section may be formed using a CP. At that time, a thermosetting resin may be packed into the positive electrode mixture layer, and cured. Next, a scanning electron micrograph (hereinafter, a SEM image) of the cross section is taken. When determining the average particle diameter of the secondary particles, a SEM image is taken such that 10 or more positive electrode active material particles (secondary particles) are observed. The equivalent circle diameters of cross sections of 10 or more positive electrode active material particles (secondary particles) are obtained, and their average value is determined as an average particle diameter. Here, an equivalent circle diameter refers to a diameter of a circle having the same area as the area of each particle observed on a cross section of the particle (the area of the particle observed on a cross section of the positive electrode mixture layer). When determining the average particle diameter of the primary particles, a SEM image is taken such that 10 or more primary particles are observed, the equivalent circle diameters of cross sections of 10 or more primary particles are obtained through image processing, and their average value is determined as an average particle diameter.

(Second metal oxide)

The second metal oxide attached to the primary particles preferably includes at least one metal element selected from the group consisting of Li, Si, Al, Ti, Cr, Zn, Mg, Ge, Ga, Sn, Ta, and Nb, because in this case, high electrical resistance can be maintained in a heat-generating environment such as in the event of short circuit. The oxides of these metal elements may be used singly, or in combination of two or more. The second metal oxide usually differs in the composition from the first metal oxide, and may differ in the crystal structure from the first metal oxide.

In the positive electrode active material layer, the amount of the metal element contained in the second metal oxide may be, relative to the total amount of metal elements except Li in the first metal oxide, 0.03 mol% or more and 10 mol% or less, and may be 0.05 mol% or more and 1 mol% or less. Having such an element balance can increase the effect by the second metal oxide to improve the safety of the secondary battery.

The second metal oxide desirably contains titanium having a valence of 3 or less. The stoichiometric amount of oxygen in titanium dioxide is 2 moles per 1 mole of titanium. An oxide of titanium having a valence of 3 or less, however, is denoted by $TiO_x$, where x is less than 2. For example, $1.500 \leq x \leq 1.999$. $TiO_x$ can be produced by oxidizing a Ti compound under appropriate conditions in an atmosphere of 100 °C or more and 200 °C or less, for example, of about 150 °C or 150 °C or less. $TiO_x$ may be crystalline or amorphous. Oxides of titanium, depending on the valence of the titanium, differ in temperature dependence of electrical resistance. Accordingly, a titanium oxide containing a plurality of kinds of titanium with different valences is lower in temperature dependence of electrical resistance than a titanium oxide only containing titanium with a single valence. This tendency, without limited to titanium, applies to any of oxides of the exemplified metals. When the temperature dependence of electrical resistance of the second metal oxide is low, the electrical resistance shows no significant change over a wide temperature range, so that the high resistance is maintained even at high temperature.

For analyzing the valence of the second metal oxide, X-ray photoelectron spectroscopy (XPS), X-ray absorption near edge structure (XANES) spectroscopy, or electron energy loss spectroscopy (EELS) can be used. An electrochemical device is disassembled, and an electrode is taken out therefrom, to obtain a thin sample (about 100 nm thick) of the active material layer for observation with a transmission electron microscope (TEM). An active material particle in the sample is observed with a TEM. With respect to the active material particle, an elemental mapping by energy dispersive X-ray spectroscopy (TEM-EDS analysis) is performed to confirm the presence of the second metal oxide on the surface of the active material particle. Then, the valence evaluation of the metal element contained in the second metal oxide is performed using XPS, XANES, or EELS.

The form of the second metal oxide is not limited to a particular one. The second metal oxide may be contained in a film covering at least part of the surfaces of the secondary particles or primary particles, and may be attached in the form of particles to the surface of the positive electrode active material. For example, the second metal oxide may be packed in the gaps between the primary particles or the interfaces between the primary particles of the positive electrode active material.

Examples of the method for attaching the second metal oxide to the surface of the positive electrode active material include solid phase synthesis method, liquid phase synthesis method, chemical vapor deposition (CVD) method, atomic layer deposition (ALD) method, and physical vapor deposition (PVD) method. In particular, ALD method is preferred in that the second metal oxide can be attached at a relatively low temperature to the positive electrode active material in the positive electrode active material layer. According to ALD method, the second metal oxide can be attached to the positive electrode active material in an atmosphere of 200 °C or less (e.g., 150 °C or less). Therefore, even when ALD method is applied to the positive electrode active material layer of the manufactured positive electrode, the constituent components of the positive electrode mixture are unlikely to be denatured by heat. Alternatively, the second metal oxide may be attached to the positive electrode active material (secondary particles) before blended into the positive electrode mixture. Also, desired secondary particles may be granulated, by using primary particles with the second metal oxide attached thereto and primary particles with no second metal oxide attached thereto. In that case, a positive electrode slurry containing a positive electrode active material with the second metal oxide attached in advance is applied onto the current collector, to form a positive electrode active material layer.

The second metal oxide is preferably contained in the film covering at least part of the surfaces of the secondary particles. In that case, the second metal oxide is attached also to at least part of the surfaces of the second primary particles. When using two or more kinds of second metal oxides, a plurality of the second metal oxides may be mixed or may be disposed in layers.

The thickness of the second metal oxide-containing film formed so as to attach to at least part of the surfaces of the second primary particles is preferably 30 nm or less, more preferably 10 nm or less. When the thickness of the second metal oxide-containing film is set within the above range, the second metal oxide-containing film is unlikely to inhibit the diffusion of lithium ions during normal use of the secondary battery, and in the event of heat generation such as short circuit, the second metal oxide maintains its high resistance to suppress the current. The thickness of the film can be measured by SEM or TEM cross-sectional observation of the active material particles.

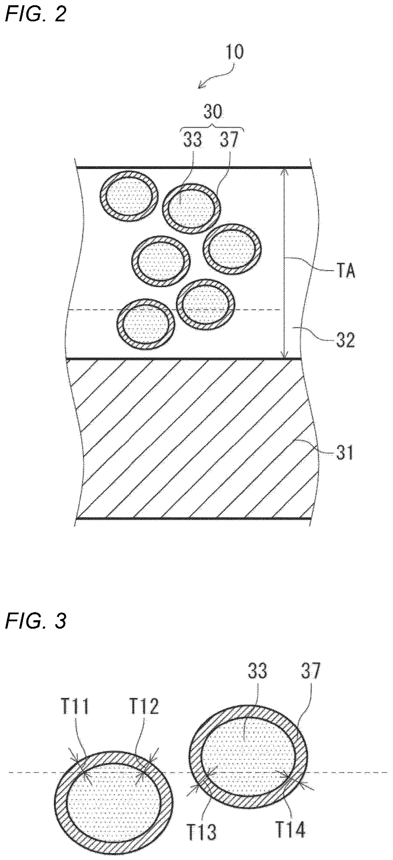

A description will be given below of a calculation method of, for example, a thickness T of a second metal oxide-containing film 37 covering an active material particle 33 in a positive electrode active material layer 32 at a randomly selected position from the surface of a positive electrode current collector 31, with reference to FIGS. 2 and 3. For the sake of convenience, in FIG. 3, only two active material particles 30 having the second metal oxide-containing film 37 are shown.

Ten active material particles (secondary particles) 30 each partially overlapping a straight line drawn at a position within a region from a position at 0.25TA to a position of 0.75TA from the surface of the positive electrode current collector in the positive electrode active material layer and having a maximum diameter of 5 $\mu$m or more are selected, where the TA is the thickness of the positive electrode active material layer. For each particle, the thickness of the second metal oxide-containing film at one or two intersections between the straight line and the outer edge of the active material particle 33 is measured (T11, T12, T13, T14, ...). The average value of the thicknesses at up to these 20 points is calculated. After calculating this average value, with the data differing by 20% or more from the obtained average value excluded, the average value is calculated again. This corrected average value is determined as the thickness T of the film.

(Binder)

As the binder for the positive electrode, for example, a resin material is used. Examples of the binder include fluorocarbon resins, polyolefin resins, polyamide resins, polyimide resins, acrylic resins, and vinyl resins. The binder may be used singly or in combination of two or more kinds.

(Conductive agent)

Examples of the conductive agent include carbon nanotubes (CNTs), carbon fibers other than CNTs, and conductive particles (e.g., carbon black, graphite).

<Negative electrode>

A negative electrode includes, for example, a negative electrode current collector, and may include a negative electrode active material layer. The negative electrode active material layer is supported on one or both surfaces of the negative electrode current collector.

[Negative electrode current collector]

As the negative electrode current collector, a nonporous conductive substrate (metal foil, etc.) and a porous conductive substrate (mesh, net, punched sheet, etc.) can be used. Examples of the material of the negative electrode current collector include stainless steel, nickel, a nickel alloy, copper, and a copper alloy.

[Negative electrode active material layer]

The negative electrode active material layer may be a negative electrode mixture layer constituted of a negative electrode mixture. The negative electrode mixture layer is in the form of a layer or film. The negative electrode mixture contains particles of a negative electrode active material as an essential component, and may contain a binder, a conductive agent, a thickener, and the like, as optional components. A lithium metal foil or lithium alloy foil may be attached as a negative electrode active material layer to the negative electrode current collector.

The negative electrode mixture layer can be formed by, for example, applying a negative electrode slurry of a negative electrode mixture containing particles of a negative electrode active material, a binder, and the like dispersed into a dispersion medium, onto a surface of a negative electrode current collector, followed by drying. The dry applied film may be rolled as necessary.

(Negative electrode active material)

The negative electrode active material includes a material that electrochemically absorbs and releases lithium ions, lithium metal, a lithium alloy, and the like. As the material that electrochemically absorbs and releases lithium ions, a carbon material, an alloy-type material, and the like can be used. Examples of the carbon material include graphite, graphitizable carbon (soft carbon), and non-graphitizable carbon (hard carbon). Particularly preferred is graphite, which is stable during charging and discharging and whose irreversible capacity is small. As the alloy-type material, a material containing at least one metal capable of forming an alloy with lithium may be used, examples of which include silicon, tin, a silicon alloy, a tin alloy, a silicon compound, and a tin compound.

(Binder)

The binder may be, for example, styrene-butadiene rubber, but not particularly limited thereto.

(Conductive agent)

Examples of the conductive agent include carbon nanotubes (CNTs), carbon fibers other than CNTs, and conductive particles (e.g., carbon black, graphite).

(Thickener)

Examples of the thickener include: cellulose derivatives (cellulose ethers, etc.), such as carboxymethyl cellulose (CMC) and modified products thereof (including salts, such as Na salt), and methyl cellulose; saponified products of a polymer having a vinyl acetate unit, such as polyvinyl alcohol; and polyethers (e.g., polyalkylene oxide, such as polyethylene oxide).

<Separator>

The separator is interposed between the positive electrode and the negative electrode. The separator is excellent in ion permeability and has moderate mechanical strength and electrically insulating properties. The separator may be a microporous thin film, a woven fabric, a nonwoven fabric, and the like. The material of the separator may be, for example, polyolefin, such as polypropylene and polyethylene. The separator may have a heat-resistant insulating layer as a surface layer on at least one side. The heat-resistant insulating layer may contain an inorganic oxide filler as a major component (e.g., 80 mass% or more), or a heat-resistant resin as a major component (e.g., 40 mass% or more). The heat-resistant resin may be a polyamide resin, such as aromatic polyamide (aramid), a polyimide resin, a polyamide imide resin, and the like.

<Electrolyte>

The electrolyte may be a liquid electrolyte (electrolyte solution), may be a gel electrolyte, and may be a solid electrolyte. The liquid electrolyte (electrolyte solution) may be, for example, a nonaqueous electrolyte with lithium-ion conductivity. The nonaqueous electrolyte contains, for example, a nonaqueous solvent and a lithium salt dissolved in the nonaqueous solvent. The concentration of the lithium salt in the nonaqueous electrolyte is, for example, 0.5 mol/L or more and 2 mol/L or less. The nonaqueous electrolyte may contain a known additive.

The gel electrolyte contains a lithium salt and a matrix polymer, or contains a lithium salt, a nonaqueous solvent, and a matrix polymer. The matrix polymer may be, for example, a polymer material that absorbs a nonaqueous solvent and turns into a gel. Examples of the polymer material include a fluorocarbon resin, an acrylic resin, a polyether resin, and polyethylene oxide.

The solid electrolyte may be an inorganic solid electrolyte. As the inorganic solid electrolyte, for example, a known material for use in all-solid lithium-ion secondary batteries and the like (e.g., oxide-based solid electrolyte, sulfide-based solid electrolyte, halide-based solid electrolyte, etc.) is used.

As the nonaqueous solvent, for example, a cyclic carbonic acid ester, a chain carbonic acid ester, a cyclic carboxylic acid ester, and the like are used. Examples of the cyclic carbonic acid ester include propylene carbonate (PC), ethylene carbonate (EC), and fluoroethylene carbonate (FEC). Examples of the chain carbonic acid ester include diethyl carbonate (DEC), ethyl methyl carbonate (EMC), and dimethyl carbonate (DMC). Examples of the cyclic carboxylic acid ester include $\gamma$-butyrolactone (GBL), and $\gamma$-valerolactone (GVL). The nonaqueous solvent may be used singly, or in combination of two or more kinds.

Examples of the lithium salt include a lithium salt of a chlorine-containing acid ($LiClO_4$, $LiAlCl_4$, $LiB_{10}Cl_{10}$, etc.), a lithium salt of a fluorine-containing acid ($LiPF_6$, $LiBF_4$, $LiSbF_6$, $LiAsF_6$, $LiCF_3SO_3$, $LiCF_3CO_2$, etc.), a lithium salt of a fluorine-containing acid imide ($LiN(SO_2F)_2$, $LiN(CF_3SO_2)_2$, $LiN(CF_3SO_2)(C_4F_9SO_2)$, $LiN(C_2F_5SO_2)_2$, etc.), and a lithium halide (LiCl, LiBr, LiI, etc.). The lithium salt may be used singly, or in combination of two or more kinds.

<Structure of secondary battery>

The lithium-ion secondary battery, for example, has a structure in which an electrode group formed by winding the positive electrode and the negative electrode with the separator interposed therebetween is housed together with the nonaqueous electrolyte in an outer body. Without limited thereto, a different form of electrode group may be adopted. For example, a stacked-type electrode group formed by stacking the positive electrode and the negative electrode with the separator interposed therebetween may be adopted. The battery form is also not limited, and may be cylindrical, prismatic, coin, button, or laminate type.

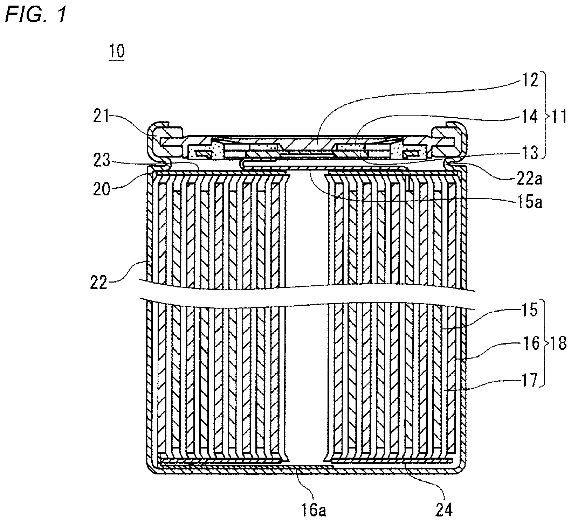

In the following, the structure of a secondary battery including the positive electrode material according to the present disclosure will be described with reference to FIG. 1. FIG. 1 is a longitudinal cross-sectional view of a cylindrical nonaqueous secondary battery 10 which is an example of the present embodiment. The present disclosure, however, is not limited to the following configuration.

The secondary battery 10 includes an electrode group 18, a liquid electrolyte (not shown), and a bottomed cylindrical battery can 22 housing them. A sealing assembly 11 is clamped onto the opening of the battery can 22, with a gasket 21 interposed therebetween. This seals the inside of the battery. The sealing assembly 11 includes a valve body 12, a metal plate 13, and an annular insulating member 14 interposed between the valve body 12 and the metal plate 13. The valve body 12 and the metal plate 13 are connected to each other at their respective centers. A positive electrode lead 15a extended from the positive electrode plate 15 is connected to the metal plate 13. Therefore, the valve body 12 functions as a positive external terminal. A negative electrode lead 16a extended from the negative electrode plate 16 is connected to the bottom inner surface of the battery can 22. An annular groove 22a is formed near the open end of the battery can 22. A first insulating plate 23 is placed between one end surface of the electrode group 18 and the annular groove 22a. A second insulating plate 24 is placed between the other end surface of the electrode group 18 and the bottom of the battery can 22. The electrode group 18 is formed of the positive electrode plate 15 and the negative electrode plate 16 wound together, with the separator 17 interposed therebetween.

<Production method of positive electrode>

A positive electrode for a secondary battery including the positive electrode material according to the present disclosure can be produced in the following procedure. A description will be given of a production method of a positive electrode in which the second metal oxide is attached to at least part of the surfaces of the first and second primary particles.

A step of forming a positive electrode active material layer includes: a supporting step of allowing active material particles (secondary particles) to be supported on a surface of a positive electrode current collector, to form a precursor layer; a rolling step of rolling the precursor layer; and a film formation step of exposing the active material particles to a gas phase containing a metal element to be contained in the second metal oxide (hereinafter, sometimes referred to as a metal element M), to form a second metal oxide-containing film so as to cover at least part of the surfaces of the active material particles. The rolling step and the film formation step may be performed in any order. The film formation step may be performed after the rolling step, or the rolling step may be performed after the film formation step. With the latter taken as an example, the step of forming a positive electrode active material layer will be specifically described below.

(I) Supporting step (Step 1)

The precursor layer can be formed by applying a positive electrode slurry in which the constituent components of a positive electrode mixture are dispersed into a dispersion medium, onto a surface of a positive electrode current collector, followed by drying. The positive electrode mixture includes secondary particles of the positive electrode active material) as an essential component, and can include a binder, a thickener, and the like, as optional components.

Examples of the dispersion medium include, but are not limited to, water, alcohols such as ethanol, ethers such as tetrahydrofuran, amides such as dimethylformamide, N-methyl-2-pyrrolidone (NMP), and mixed solvents thereof.

(II) Film formation step (Step 2)

Next, the active material particles supported on the positive electrode current collector, that is, the precursor layer, are exposed to a gas phase containing a metal element M. In this way, a film containing an oxide of the metal element M (second metal oxide) is formed on at least part of the surfaces of the active material particles. When forming a second metal oxide-containing film, the density of the positive electrode active material in the precursor layer is preferably 2.2 $g/cm^3$ or more and 3.2 $g/cm^3$ or less, more preferably 2.5 $g/cm^3$ or more and 3.0 $g/cm^3$ or less.

Examples of the gas phase method include CVD, ALD, and PVD methods. ALD method is particularly preferred in that the oxide film can be formed at a relatively low temperature. According to ALD method, the second metal oxide-containing film can be formed in an atmosphere of 200 °C or less (e.g., 150 °C or less).

In ALD method, a vaporized precursor (source gas) and an oxidant are alternately supplied into a reaction chamber in which an object to be processed (here, the precursor layer) is placed. In this way, a second metal oxide-containing film is formed on surfaces of the secondary particles.

According to ALD method, which allows self-limiting film growth, the metal element M can deposit on the atomic level on a surface of the object. Therefore, according to ALD method, the number of cycles each consisting of: source gas supply (pulsing) → source gas evacuation (purging) -> oxidant supply (pulsing) -> oxidant evacuation (purging) may be controlled to control the overall thickness of the second metal oxide-containing film.

The precursor is an organic metal compound containing a metal element M. As the precursor, various organic metal compounds as conventionally used in ALD method can be used.

When the metal element M is Ti, examples of the precursor containing Ti include bis(t-butylcyclopentadienyl) titanium(IV) dichloride ($C_{18}H_{26}Cl_2Ti$), tetrakis(dimethylamino)titanium(IV) ($[(CH_3)_2N]_4Ti$, TDMAT), and tetrakis(diethylamino)titanium(IV) ($[(C_2H_5)_2N]_4Ti$), tetrakis(ethylmethylamino)titanium(IV) ($Ti[N(C_2H_5)(CH_3)]_4$), titanium(IV) (diisopropoxide-bis(2,2,6,6-tetramethyl-3,5-heptanedioate ($Ti[OCC(CH_3)_3CHCOC(CH_3)_3]_2(OC_3H_7)_2$), titanium tetrachloride ($TiCl_4$), titanium(IV) isopropoxide ($Ti[OCH(CH_3)_2]_4$), and titanium(IV) ethoxide ($Ti[O(C_2H_5)]_4$). Examples of the precursor containing Al include trimethylaluminum (($CH_3)_3Al$, TMA).

The source gas may contain a plurality of kinds of precursors. Into the reaction chamber, different kinds of precursors may be supplied simultaneously or sequentially. Alternatively, the kind of the precursor contained in the source gas may be changed for each cycle.

As the oxidant, an oxidant as conventionally used in ALD method can be used. Examples of the oxidant include water, oxygen, and ozone. The oxidant may be supplied in the form of a plasma generated from the oxidant, into the reaction chamber.

The ALD method conditions are not particularly limited, as long as a second metal oxide-containing film can be formed. The temperature of the atmosphere containing the precursor or oxidant may be 10 °C or more and 200 °C or less (e.g., 150 °C or less), may be 25 °C or more and 200 °C or less, may be 100 °C or more and 200 °C or less, and may be 120 °C or more and 200 °C or less (e.g., 150 °C or less). From a similar point of view, the pressure in the reaction chamber during processing may be, for example, $1\times10^{-5}$ Pa or more and $1\times10^5$ Pa or less, and may be $1\times10^{-4}$ Pa or more and $1\times10^4$ Pa or less.

When the temperature of the atmosphere containing the precursor or oxidant in the reaction chamber is 10 °C or more and 200 °C or less (e.g., 120 °C or more and 200 °C or less) and the pressure in the reaction chamber during processing is $1\times10^{-5}$ Pa or more and $1\times10^5$ Pa or less, the pulsing time of the source gas may be 0.01 seconds or more, and may be 0.05 seconds or more. The pulsing time of the source gas may be 5 seconds or less, and may be 3 seconds or less.

After the above supporting step (Step 1) and film formation step (Step 2), the supporting step (Step 1) may be further performed. For example, a positive electrode active material layer which includes a first positive electrode mixture layer containing active material particles having a second metal oxide-containing film, and a second positive electrode mixture layer containing active material particles having no second metal oxide-containing film may be formed such that the first positive electrode mixture layer is disposed close to the positive electrode current collector, and the second positive electrode mixture layer is disposed on the first positive electrode mixture layer. Thereafter, the film formation step (Step 2) may be further performed.

(III) Rolling step (Step 3)

The precursor layer (i.e., positive electrode active material layer) including the active material particles with a second metal oxide-containing film formed on their surfaces may be rolled. The conditions for rolling are not particularly limited, and may be set as appropriate so that the positive electrode active material layer has a predetermined thickness or density. The density of the positive electrode active material in the positive electrode active material layer is preferably, for example, 2.5 g/cm$^3$ or more and 4.0 g/cm$^3$ or less, and may be 3.3 g/cm$^3$ or more and 3.7 g/cm$^3$ or less.

The description is given above of a method of forming a second metal oxide-containing film on the active material particles supported on the positive electrode current collector. However, a positive electrode for a secondary battery including the positive electrode material according to the present disclosure can also be obtained by applying a positive electrode slurry including active material particles with a second metal oxide-containing film formed thereon, onto a surface of the positive electrode current collector.

The positive electrode active material particles covered with a second metal oxide-containing film can be produced using solid-phase synthesis method, liquid-phase synthesis method, chemical vapor deposition (CVD) method, atomic layer deposition (ALD) method, physical vapor deposition (PVD) method, and the like. The positive electrode active material particles covered with a second metal oxide-containing film can also be produced by: preparing primary particles of the first metal oxide with the second metal oxide attached thereto, and primary particles of the first metal oxide with no second metal oxide attached thereto; forming a core from an aggregate of the primary particles of the first metal oxide with no second metal oxide attached thereto; and allowing the primary particles of the first metal oxide with the second metal oxide attached thereto to be disposed around the core.

In the following, the present disclosure will be specifically described with reference to Examples and Comparative Examples. The present disclosure, however, is not limited to the following Examples.

«Example 1»

[Production of positive electrode]

For a positive electrode active material (first metal oxide) constituting active material particles (secondary particles), a composite oxide N (LiNi$_{0.85}$Co$_{0.10}$Al$_{0.05}$O$_2$) having a layered rock-salt type structure and containing lithium and Ni was used. The median diameter D1 in the volume-based particle size distribution of the active material particles measured by a laser diffraction-scattering method was 13 $\mu$m. As a positive electrode current collector, a 15-$\mu$m-thick aluminum foil was prepared.

NMP was added to a positive electrode mixture containing active material particles (D1 = 13 $\mu$m), acetylene black, and polyvinylidene fluoride (PVDF) in a mass ratio of 95:2.5:2.5, and stirred together, to prepare a positive electrode slurry.

(I) Supporting step (Step 1)

The positive electrode slurry was applied onto a surface of the aluminum foil serving as a positive electrode current collector, and the applied film was dried, to form a precursor layer of a positive electrode active material layer on each of both sides of the aluminum foil.

(II) Film formation step (Step 2)

A laminate (positive electrode precursor) of the positive electrode current collector and the precursor layers was accommodated in a predetermined reaction chamber, and using ALD method, the surfaces of the active material particles in the precursor layer were covered with a second metal oxide-containing film in the following procedure, such that the surfaces of the second primary particles were partially covered.

Tetrakis(dimethylamino)titanium(IV) (TDMAT), which was a precursor serving as a Ti supply source, was vaporized and supplied into the reaction chamber accommodating the positive electrode precursor. The pulsing time was set to 0.1 seconds. The temperature of the atmosphere containing the precursor was controlled to 150 °C, and the pressure in the reaction chamber was controlled to 260 Pa. Then, 30 seconds later, the precursor in excess was purged with nitrogen gas, on the assumption that the surface of the positive electrode precursor was covered with a monomolecular layer of the precursor.

Next, an oxidant (H$_2$O) was vaporized and supplied into the reaction chamber accommodating the positive electrode precursor. The pulsing time was set to 0.015 seconds. The temperature of the atmosphere containing the oxidant was controlled to 150 °C, and the pressure in the reaction chamber was controlled to 260 Pa. Then, 30 seconds later, the oxidant in excess was purged with nitrogen gas.

A series of operations (ALD cycle) consisting of precursor-supply, -purge, and oxidant-supply, -purge was repeated 60 times, to form an oxide film containing Ti as a second metal oxide-containing film.

The oxide film on a surface of the secondary particles was analyzed with a TEM. The average thickness of the oxide film was 3 nm. XPS analysis found that the value of x in the oxide $TiO_x$ was 1.7. In the XPS analysis, with the peak of the inner-shell 1s orbital spectrum of the surface contamination carbon set at 284.6 eV, analysis was made after electrostatic charge correction, using the oxygen 1s orbital spectrum. In peak fitting using a Gaussian function, peaks centered at 530.4 eV and 530.8 eV were determined as corresponding to tetravalent titanium and trivalent titanium, respectively, and using the area ratio thereof, the average titanium valence was calculated.

(III) Rolling step (Step 3)

Next, the precursor layers (i.e., positive electrode active material layers) of the active material particles with a second metal oxide-containing film formed on their surfaces were rolled, to adjust the density of the positive electrode active material in the rolled positive electrode active material layers to 3.6 g/cm$^3$. The overall thickness of the positive electrode after rolling was 160 $\mu$m.

[Production of negative electrode]

Water was added to a negative electrode mixture containing graphite serving as a negative electrode active material, sodium carboxymethyl cellulose (CMC-Na), and styrene-butadiene rubber (SBR) in a mass ratio of 96:2:2, and stirred together, to prepare a negative electrode slurry. Next, the negative electrode slurry was applied onto a surface of a copper foil serving as a negative electrode current collector, and the applied film was dried, and then rolled, to form a negative electrode active material layer on each of both sides of the copper foil. The density of the negative electrode active material in the negative electrode active material layers was adjusted to 1.6 g/cm$^3$. The overall thickness of the negative electrode was 170 $\mu$m.

[Preparation of nonaqueous electrolyte]

A nonaqueous electrolyte was prepared by dissolving $LiPF_6$ at a concentration of 1.0 mol/L in a mixed solvent containing ethylene carbonate (EC) and diethyl carbonate (DEC) in a volume ratio of 3:7.

[Fabrication of secondary battery]

With a tab attached to each electrode, the positive electrode and the negative electrode were wound spirally with a separator interposed therebetween such that the tab was positioned at the outermost layer, thereby to form an electrode group. The electrode group was inserted into an outer body made of aluminum laminated film and dried under vacuum at 105 °C for two hours. Thereafter, the liquid electrolyte was injected, and the opening of the outer body was sealed, to complete a secondary battery A1.

After obtaining a cross section of the positive electrode using a CP, TEM-EDX elemental mapping was performed, to observe the cross section of an active material particle. S1:S2:S3 was 100:20:1, where the S1 represents a ratio S in the near-surface region of the first primary particle, the S2 represents a ratio S in the near-surface region of the second primary particle, and the S3 represents a ratio S in the near-surface region of the third primary particle.

«Example 2»

A positive electrode and a secondary battery A2 were produced in the same manner as in Example 1, except that in the film formation step (Step 2), the temperature of the reaction chamber was set to 200 °C, and evaluated. The average thickness of the oxide film on the surfaces of the secondary particles was 3 nm. The value of x in the oxide $TiO_x$ was 1.91. S1:S2:S3 was 100:5:0.

<<Comparative example 1>>

A positive electrode and a secondary battery B1 were produced in the same manner as in Example 1, except that the oxide film formation was not performed.

<<Comparative example 2>>

A positive electrode and a secondary battery B2 were produced in the same manner as in Example 1, except that in the film forming step (step 2), titanium isopropoxide was used as a precursor serving as a Ti supply source, and the number of cycles was set to 200. The average thickness of the oxide film on the surfaces of the secondary particles was 3 nm. The value of x in the oxide $TiO_x$ was 1.999. Attachment of the second metal oxide was observed only on the surfaces of the secondary particles, and not observed on the second and third primary particles.

[Evaluation]

The secondary batteries obtained in Examples and Comparative Examples were evaluated for direct current internal resistance (DCIR) and nail penetration test as described below. The results are shown in Table 1.

(DCIR)

In a 25 °C environment, the battery was charged at a constant current of 0.3C until the battery voltage reached 4.2 V, then discharged at a constant current of 0.5C, to measure a battery voltage after 30 seconds. The DCIR was calculated from the following formula,

$$DCIR = (4.2 - V) / I$$

where the V represents the battery voltage after 30 seconds, and the I represents the current value.
The DCIR of each battery was determined as a percentage (%), with the DCIR of the battery B1 was taken as 100.

(Nail penetration test)

(a) In a 25 °C environment, the battery was charged at a constant current of 0.3C until the battery voltage reached 4.2 V, and then, continuously, constant-voltage charged until the current value reached 0.05C.
(b) In a 25 °C environment, the tip of a round nail (diameter 2.7 mm) was brought into contact with the center of the battery charged in (a), and driven into the battery at a speed of 1 mm/sec. The driving of the round nail was stopped immediately after the detection of a battery voltage drop ($\Delta$50 mV) due to internal short circuit. The surface temperature of the battery was measured one minute after the battery was short-circuited.

[Table 1]

| battery | oxide film | film thickness (nm) | S1:S2:S3 | $TiO_X$ | DCIR (%) | surface temperature (°C) |
|---|---|---|---|---|---|---|
| A1 | with | 3 | 100:20:1 | $TiO_{1.7}$ | 99 | 27 |
| A2 | with | 3 | 100:5:0 | $TiO_{1.91}$ | 100 | 40 |
| B1 | without | - | - | - | 100 | 80 |
| B2 | with (only on secondary particle surfaces) | 3 | - | $TiO_{1.999}$ | 100 | 80 |

Table 1 shows that, in the batteries A1 and A2, the battery surface temperature after short-circuiting was considerably low, as compared to the battery B1 in which the second metal oxide-containing film was not formed and the battery B2 in which the second metal oxide-containing film was attached only on the surfaces of the secondary particles. Presumably as a result of having the second metal oxide attached to the surfaces of the first and second primary particles, the electrical resistance of the active material particles was considered to be maintained even after heat generation. In the battery B2, although the second metal oxide was attached to the surfaces of the secondary particles, the average thickness of the oxide film was as thin as 3 nm, and presumably due to this, the rise in battery surface temperature after short-circuiting was not able to be suppressed. In the batteries A1 and A2, the average thickness of the second metal oxide-containing film was as thin as 3 nm like in the battery B2, but the second metal oxide was attached also to the surfaces of the second primary particles, which resulted in a significantly lower battery surface temperature after short-circuiting.
Especially in the battery A1 in which the film formation was performed at 150 °C, the surface temperature was much lower than that in the battery A2 in which the film formation was performed at 200 °C. It can be inferred that, by forming a film at a low temperature, a sufficient film was formed on the second primary particles inside the secondary particles.

Furthermore, the formation of the film caused almost no change in DCIR, which confirmed that the safety and the battery performance were both achieved by forming a second metal oxide-containing film.

In Comparative Example 2, titanium isopropoxide was used as a precursor serving as a Ti supply source to produce a positive electrode in which the second metal oxide was attached only to the surfaces of the secondary particles. All positive electrodes produced using titanium isopropoxide as a precursor, however, are not always of Comparative Examples. Whether or not the second metal oxide is to be attached to the first primary particles, second primary particles, and third primary particles depends on the type of the precursor and the temperature and pressure during ALD. That is, even when titanium isopropoxide is used as a precursor, by adjusting the temperature and pressure during ALD, S1:S2:S3 can be, for example, 100:20:0.

[Industrial Applicability]

The positive electrode for a secondary battery according to the present disclosure and a secondary battery including the same are useful as main power sources for mobile communication devices, portable electronic devices, electric cars, and the like.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

| | |
|---|---|
| 10 | secondary battery |
| 11 | sealing assembly |
| 12 | valve body |
| 13 | metal plate |
| 14 | insulating member |
| 15 | positive electrode plate |
| 15a | positive electrode lead |
| 16 | negative electrode plate |
| 16a | negative electrode lead |
| 17 | separator |
| 18 | electrode group |
| 21 | gasket |
| 22 | battery can |
| 22a | groove |
| 23 | first insulating plate |
| 24 | second insulating plate |
| 31 | positive electrode current collector |
| 32 | positive electrode active material layer |
| 30 | active material particle having oxide film |
| 33 | active material particle |
| 37 | oxide film |

**Claims**

1. A positive electrode material for a secondary battery, comprising:

   a secondary particle that is an aggregate of a plurality of primary particles, wherein
   the plurality of primary particles each contain a first metal oxide as a positive electrode active material, and
   the plurality of primary particles include

      first primary particles disposed at a surface of the secondary particle,

second primary particles disposed inside the secondary particle and in contact with the first primary particles, and

third primary particles disposed inside the secondary particle and not in contact with the first primary particles, and

further comprising: a second metal oxide having a composition different from the first metal oxide, wherein the second metal oxide is attached at least to surfaces of the first primary particles and the second primary particles, and

the second metal oxide is not attached to surfaces of the third primary particles, or, an amount of the second metal oxide attached to the surfaces of the third primary particles is smaller than an amount of the second metal oxide attached to the surfaces of the second primary particles.

2.  The positive electrode material for a secondary battery according to claim 1, wherein the second metal oxide is not attached to the surfaces of the third primary particles.

3.  The positive electrode material for a secondary battery according to claim 1 or 2, wherein the second metal oxide includes at least one metal element selected from the group consisting of Li, Si, Al, Ti, Cr, Zn, Mg, Ge, Ga, Sn, Ta, and Nb.

4.  The positive electrode material for a secondary battery according to any one of claims 1 to 3, wherein the second metal oxide is represented by $TiO_x$ where x is less than 2.

5.  The positive electrode material for a secondary battery according to any one of claims 1 to 4, wherein the second metal oxide is formed in a film covering at least part of the surface of the secondary particle.

6.  The positive electrode material for a secondary battery according to claim 5, wherein a thickness of the film is 30 nm or less.

7.  The positive electrode material for a secondary battery according to claim 5 or 6, wherein a thickness of the film is 10 nm or less.

8.  The positive electrode material for secondary batteries according to any one of claims 1 to 7, wherein

the first metal oxide is a lithium-containing transition metal oxide, and

an amount of the metal element contained in the second metal oxide is 0.03 mol% or more and 10 mol% or less, relative to a total amount of metal elements other than Li contained in the first metal oxide.

FIG. 1

FIG. 2

FIG. 3

| **INTERNATIONAL SEARCH REPORT** | International application No. |
|---|---|
| | **PCT/JP2023/003973** |

**A.  CLASSIFICATION OF SUBJECT MATTER**

***H01M 4/525***(2010.01)i; ***C01G 53/00***(2006.01)i; ***H01M 4/36***(2006.01)i; ***H01M 4/485***(2010.01)i; ***H01M 4/505***(2010.01)i
FI:   H01M4/525; H01M4/36 A; H01M4/505; H01M4/485; C01G53/00 A

According to International Patent Classification (IPC) or to both national classification and IPC

**B.   FIELDS SEARCHED**

Minimum documentation searched (classification system followed by classification symbols)

H01M4/525; C01G53/00; H01M4/36; H01M4/485; H01M4/505

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2020/213369 A1 (MURATA MANUFACTURING CO., LTD.) 22 October 2020 (2020-10-22) claims, examples | 1-3, 5-8 |
| Y | | 4-8 |
| Y | JP 2021-176123 A (TOYOTA MOTOR CORP.) 04 November 2021 (2021-11-04) claims, paragraphs [0019]-[0021] | 4-8 |
| A | WO 2018/190374 A1 (MURATA MANUFACTURING CO., LTD.) 18 October 2018 (2018-10-18) examples | 1-8 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **27 March 2023** | **04 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/003973**

| Patent document cited in search report | | | Publication date (day/month/year) | Patent family member(s) | | | Publication date (day/month/year) |
|---|---|---|---|---|---|---|---|
| WO | 2020/213369 | A1 | 22 October 2020 | US 2022/0037639 A1 claims, examples EP 3923374 A1 CN 113597685 A | | | |
| JP | 2021-176123 | A | 04 November 2021 | (Family: none) | | | |
| WO | 2018/190374 | A1 | 18 October 2018 | (Family: none) | | | |

Form PCT/ISA/210 (patent family annex) (January 2015)

**EP 4 478 457 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000315502 A